# EUROPEAN PATENT SPECIFICATION

(11) **EP 0 231 109 B1**
(45) Date of publication and mention of the grant of the patent: **18.11.1993**
(21) Application number: 87300594.6
(22) Date of filing: 23.01.1987
(51) Int. Cl.: F16C 39/06, G05D 3/00

(54) **Non-contact positioning device**
Einstellungseinrichtung ohne Kontakt
Dispositif de positionnement sans contact

(30) Priority: 24.01.1986 JP 12059/86
(43) Date of publication of application: 05.08.1987
(73) Proprietor: KABUSHIKI KAISHA TOSHIBA, Kawasaki-shi, Kanagawa-ken 210 (JP)
(72) Inventor: Takahara, Kenichi c/o Patent Division, Minato-ku Tokyo (JP); Takahashi, Hiroshi c/o Patent Division, Minato-ku Tokyo (JP)
(74) Representative: Kirk, Geoffrey Thomas

(56) References cited:
- EP-A- 0 113 267
- FR-A- 2 154 069
- US-A- 3 572 854
- US-A- 4 156 548

## Description

This invention relates to a positioning device comprising a driven body and a driving body and in which magnetic means are employed to position the driven body relative to the driving body without physical contact between them.

Driving methods for known positioning devices have used either direct drive methods by drive sources, such as linear motors and solenoids, or indirect drive methods via power transmission components, such as gear-wheels and reduction gears. The suspension of the driven body has entailed the use of oil bearings, ball-bearings, air bearings and springs.

However, these types of positioning devices have the following problems: Firstly, since they are composed of combinations of multiple drive units, the construction is complex and large numbers of parts are required. Production is, therefore, extremely difficult. Secondly, since friction occurs in all parts when driving, besides the emission of heat and fluctuation of output, they become unstable due to wear and it is difficult to ensure accuracy and reliability. Thirdly, since lubrication of the bearings which suspend the driven body is required, prolonged use becomes impossible in special environments, such as the high vacuum of space.

As opposed to this, there are the types of device shown in United States Patents Nos. 4156548 and 4088018. These were devised for the purpose of supporting telescopes in space-craft insulated from the space-craft's vibration and for correcting the telescopes' optical axes, and discs are supported from their outer perimeter by six sets (12) of electromagnets. A 5 degree-of-freedom drive was achieved.

However, since in this type of prior device two electromagnets are required for a 1 degree-of-freedom drive, when positioning using a multi-degree-of-freedom drive, large numbers of electromagnets have to be used. Moreover, it is necessary to design electromagnets suitable for the respective degree-of-freedom, and, since their shapes and sizes differ, there are problems with difficulty in the arrangement of the electromagnets and complexity of construction.

It is also known from FR-A-2154069 for a positioning device to comprise a driving body having four plane surfaces supporting at least seven electromagnetic drive units and a driven body having four plane surfaces of magnetic material which correspond with the four surfaces of the driving body and where the driven body is positioned relative to the driving body without physical contact between them.

The present invention was devised in the light of problems in the prior designs. Its purpose is to provide a non-contact positioning device with easier assembly and parts control by standardising shapes and sizes of electromagnets and, at the same time, to improve reliability of operation by designing a reduction in the number of electromagnets which are used.

Accordingly the present invention is characterised in that the four surfaces on each body define a polyhedron and the driven body is positioned by regulating the coils of the drive units to control the six degrees of freedom of the driven body.

As is clear from the above explanation, by applying the construction of this invention:-
(a) Since it has complete non-contact suspension and drive function, multi-degree-of-freedom positioning can be performed with a high degree of accuracy. Therefore, the friction which was a problem with prior mechanical systems can be eliminated, and, furthermore, since no lubrication is required, the system can be used without any difficulty in a true vacuum, such as in space.
(b) Since a multi-degree-of-freedom positioning device can be constructed with a simpler construction and fewer parts, the accuracy and reliability of the positioning device can be improved.
(c) Since the driven body is a simple polyhedron, production can be made simple and easy.
(d) Standardisation of the shapes and sizes of the electromagnets installed in the driving body is simple.
(e) Furthermore, the number of electromagnets can be reduced from the prior requirement of two for each single degree-of-freedom to a minimum of seven for 6 degrees-of-freedom.

In order that the present invention may be more readily understood, it will now be described, by way of example only, with reference to the accompanying drawings, in which:-
Figure 1 is a perspective view of a non-contact positioning device according to a first embodiment of the invention;
Figure 2 is a perspective view of an electromagnet used in the non-contact positioning device shown in Figure 1;
Figure 3 is a block diagram of a position adjustment system;
Figures 4 to 6 illustrate the operation of the device;
Figure 7 is a block diagram of a position adjustment system for other embodiments of the invention;
Figure 8 is a perspective view of a non-contact positioning device according to a second embodiment of the invention;
Figure 9 is a view in the direction of arrow IX shown in Figure 8;
Figure 10 is a perspective view of a non-contact positioning device according to a third embodiment of the invention;
Figure 11 is a view in the direction of arrow XI shown in Figure 10;
Figure 12 is a perspective view of a non-contact positioning device according to a fourth embodiment of this invention;
Figure 13 is a perspective view of an electromagnet used in the positioning device shown in Figure 12;
Figure 14 is a diagram showing the magnetic circuit of an electromagnet;
Figures 15 to 17 illustrate the operation of the device;
Figure 18 is a perspective view of a non-contact positioning device according to a fifth embodiment of the invention;
Figure 19 is a view in the direction of arrow XIX shown in Figure 18;
Figures 20 to 24 illustrate the operation of the fifth embodiment of the invention;
Figure 25 is a perspective view of a non-contact positioning device according to a sixth embodiment of the invention;
Figure 26 is a perspective view of a non-contact positioning device according to a seventh embodiment of the invention; and
Figures 27 and 28 are extended views showing the disposition of electromagnets according to another embodiment of the invention.

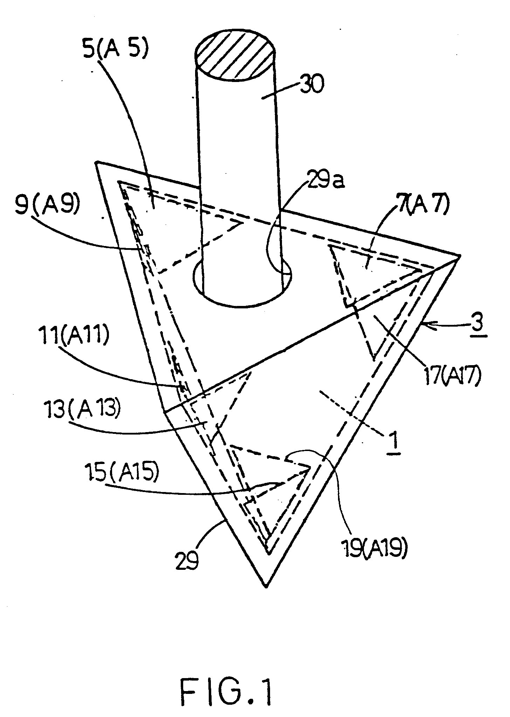

The non-contact positioning device shown in Figure 1 comprises a driven body 1 in the form of a simple polyhedron, for instance, a regular tetrahedron, of magnetic material and which is the body to be positioned, and a driving body 3 which drives the driven body 1, causing it to be suspended without contact between the two bodies.

Eight electromagnets 5, 7, 9, 11, 13, 15, 17 and 19 are provided in driving body 3 having magnetic attraction for driven body 1, with a specified magnetic gap between the bodies.

These electromagnets 5 - 19 are arranged with two electromagnets facing each corner of the outer faces of the driven body 1.

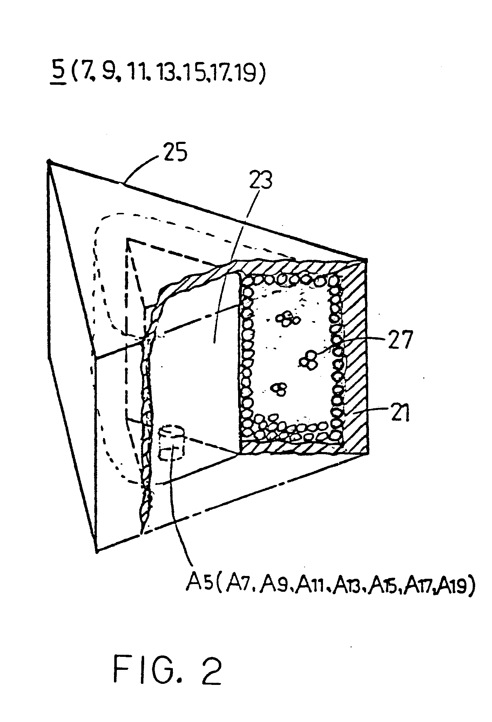

Electromagnets 5 - 19 are all of the same form, for instance, that shown in Figure 2. That is to say, they are formed of ferromagnetic material and comprise two magnetic pole-pieces 21 and 23 magnetically connected by connecting piece 25. Coil 27 is wound in the space between magnetic pole-pieces 21 and 23. Furthermore, position sensors A5 - A19 are inset into each magnetic pole-piece 23 to detect the gap distances between magnetic pole-pieces 21 and 23 and driven body 1.

As shown in Figure 1, these eight electromagnets 5 - 19 are connected by connecting members 29 which are of non-magnetic material. In other words, although not shown in the drawing, bolts are incorporated in connecting pieces 25 of electromagnets 5 - 19. These bolts pass through connecting members 29 and are secured with nuts.

A support 30 passes through a hole 29a in connecting member 29 and is fixed to the centre of the driven body 1, and communication atenna, etc., for example, are installed on its top end.

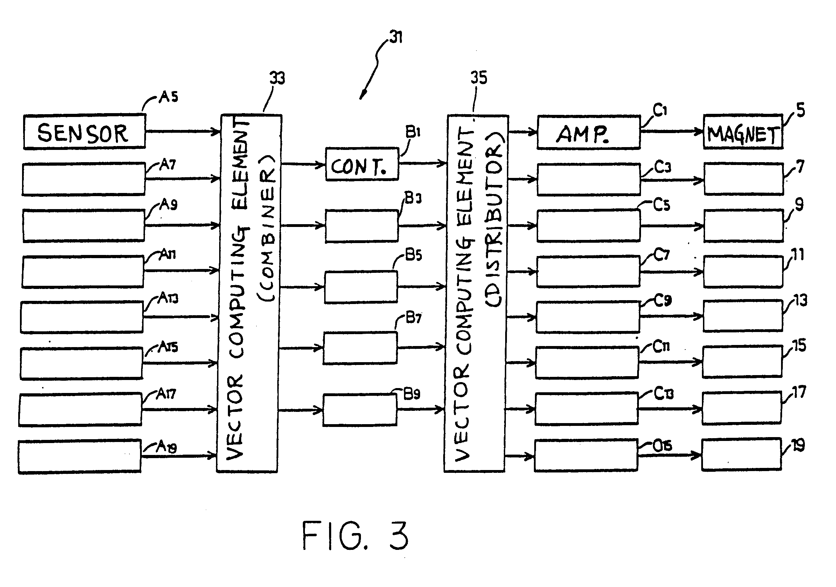

The detection signals of position sensors A5 - A19 are supplied as inputs to position adjustment system 31, shown in Figure 3, which supplies current to electromagnets 5 - 19 and, by controlling this current, the position of driven body 1 is adjusted. This position adjustment system 31 is provided with a vector computing element (combiner) 33, controllers B1 - B9, vector computing element (distributor) 35 and signal amplifiers C1 - C15. Vector computing element 33 receives the detection signals from each position sensor A1 - A19 and carries out vector computation (combination) based on the directional displacement given to each electromagnet 5 - 19. It converts the vectors to a rectangular co-ordinate system and, at the same time, compares the external command signal for each axis with the control signals which have been converted to the rectangular co-ordinate system, and outputs the deviations. Controllers B1 - B9 receive these deviations and compute the amounts of control in the rectangular co-ordinate system. Vector computing element 35 receives the amounts of control given by controllers B1 - B9 and carries out vector computation (distribution) for the direction of each electromagnet 5 - 19.

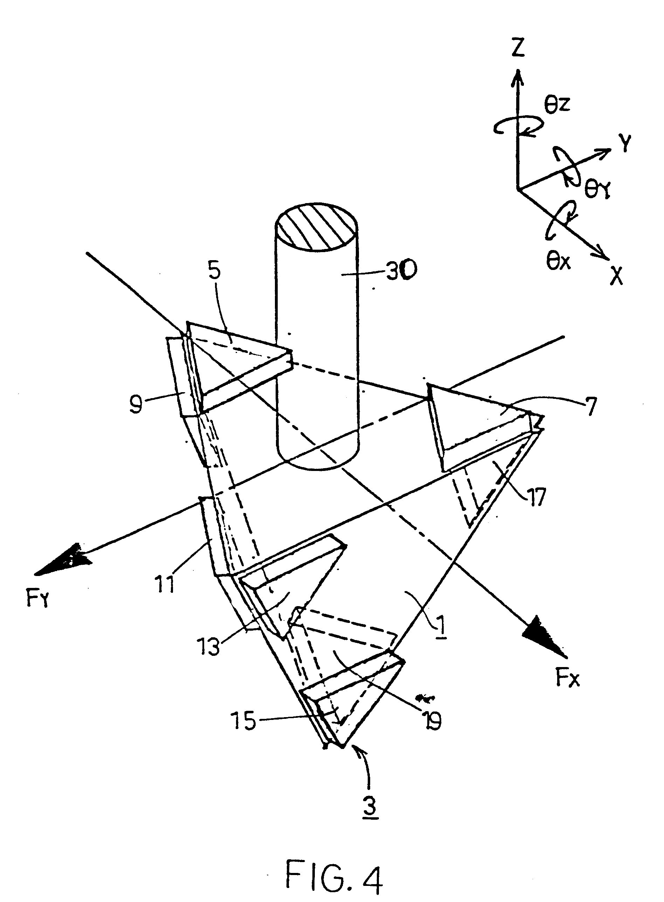

Next, the operation of the device is explained with reference to Figures 4 to 6.

In Figure 4, when the currents flowing in electromagnets 13 and 15 are increased by position adjustment system 31, shown in Figure 3, and the currents flowing in the other electromagnets are suitably increased or decreased, the magnetic force between electromagnets 13 and 15 and driven body 1 is intensified. Movement in directions other than the X axis, which occurs due to this magnetic force, is adjusted by the magnetic forces between the other electromagnets and driven body 1, and so the entire driven body 1 moves in the direction of the arrow Fₓ in the figure.

Similarly, in Figure 4, when the currents flowing in electromagnets 9 and 11 are increased by position adjustment system 31 and the currents flowing in the other electromagnets are suitably increased or decreased, the magnetic force between electromagnets 9 and 11 and driven body 1 is intensified. Movement in directions other than the Y axis, which occurs due to this magnetic force is adjusted by the magnetic forces between the other electromagnets and driven body 1, and so the entire driven body 1 moves in the direction of the arrow F_{Y} in the figure.

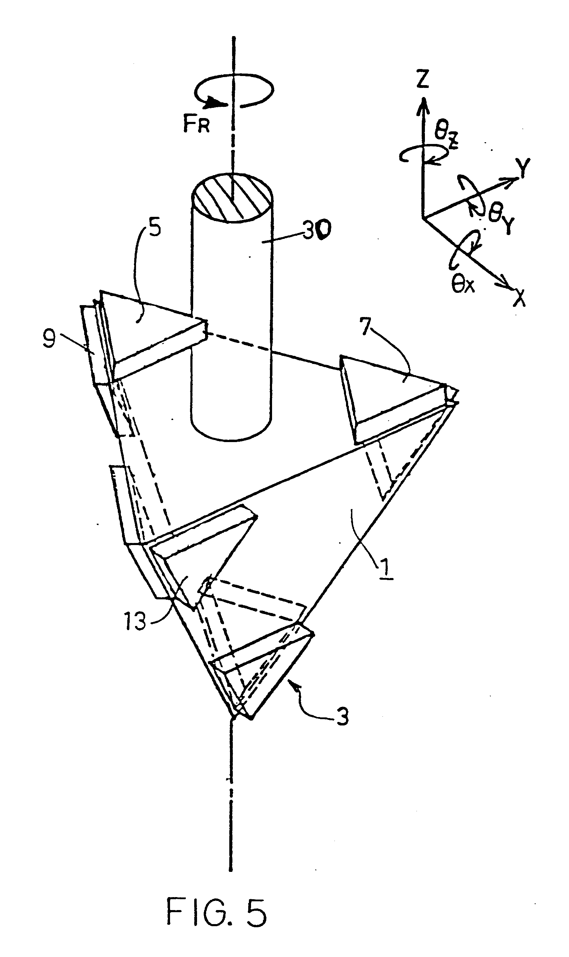

Moreover, as shown in Figure 5, when the currents flowing in electromagnets 9 and 13 are increased by position adjustment system 31 and the currents flowing in the other electromagnets are suitably increased or decreased, the magnetic force between electromagnets 9 and 13 and driven body 1 is intensified. Movement in directions other than ϑ_{z} axis, which occurs due to this magnetic force, is adjusted by the magnetic forces between the other electromagnets and driven body 1, and so the entire driven body 1 rotates in the direction of the arrow F_{R} in the figure.

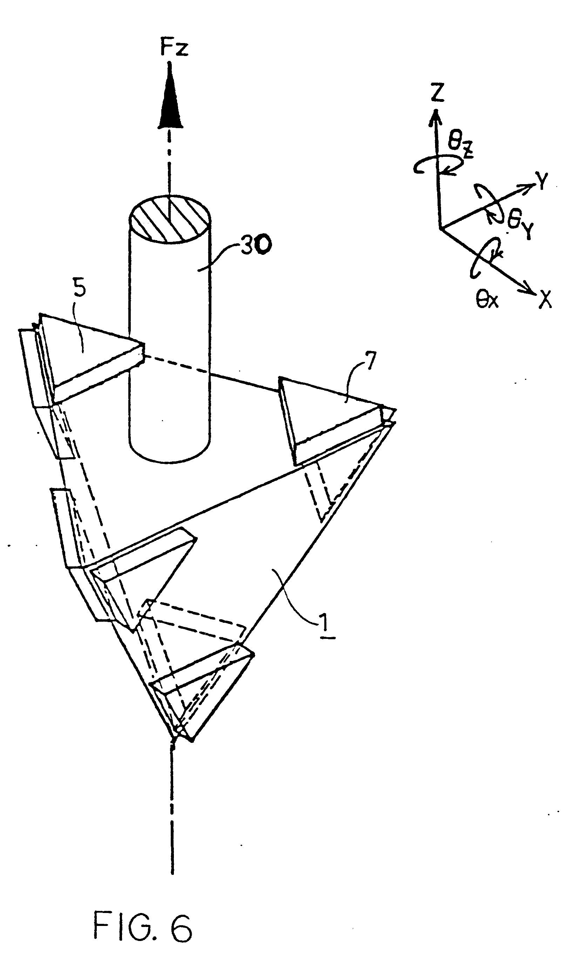

Furthermore, as shown in Figure 6, when the currents flowing in electromagnets 5 and 7 are increased by position adjustment system 31 and the currents flowing in the other electromagnets are suitably increased or decreased, the magnetic force between electromagnets 5 and 7 and driven body 1 is intensified. Movement in directions other than the Z axis, which occurs due to this magnetic force, is adjusted by the magnetic forces between the other electromagnets and driven body 1, and so the entire driven body 1 moves in the direction of the arrow sign F_{z} in the figure.

In this way, the non-contact positioning device relating to this embodiment can suspend and position driven body 1 in a given position using eight electromagnets 5 - 19 and eight position sensors A5 - A19. Therefore, the position of an antenna, etc., fitted to support 30 on driven body 1, can be controlled and a highly accurate antenna pointing control device with multi-degree-of-freedom can be achieved.

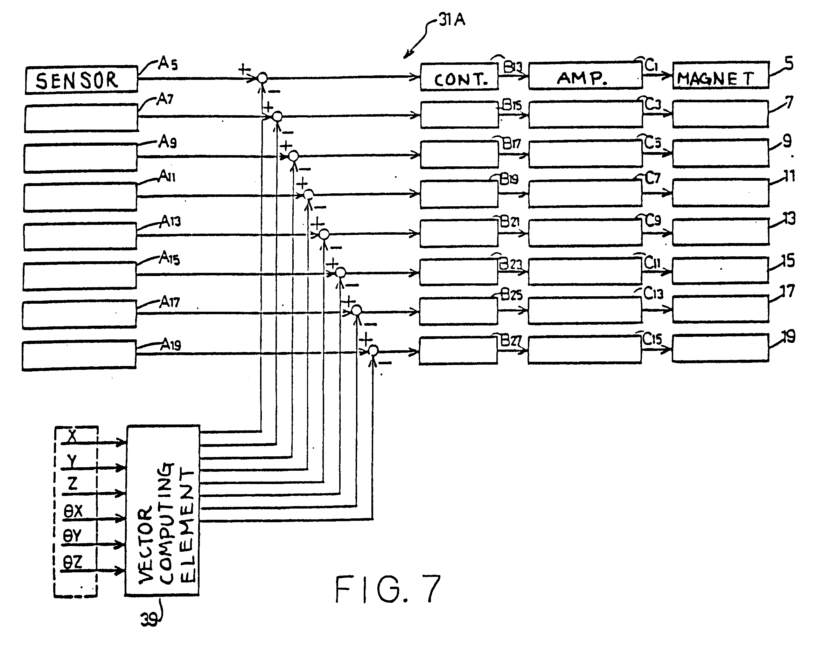

Figure 7 is a block diagram showing another embodiment of the position adjustment system. Position adjustment system 31A which relates to this embodiment is a direct control system. That is to say, it is constructed so that the external command signals given by the rectangular co-ordinate system are distributed by vector computing element 39 as directional vectors for each of electromagnets 5 - 19. The deviations between these output signals from vector computing element 39 and the detecting signals from each position sensors A5 - A19 are input to each controller B13 - B27. In each controller B13 - B27, amounts of control corresponding to these deviations are computed and output. These control signals are amplified by signal amplifiers C1 - C15 and the amplified signals are output to each of electromagnets 5 - 19.

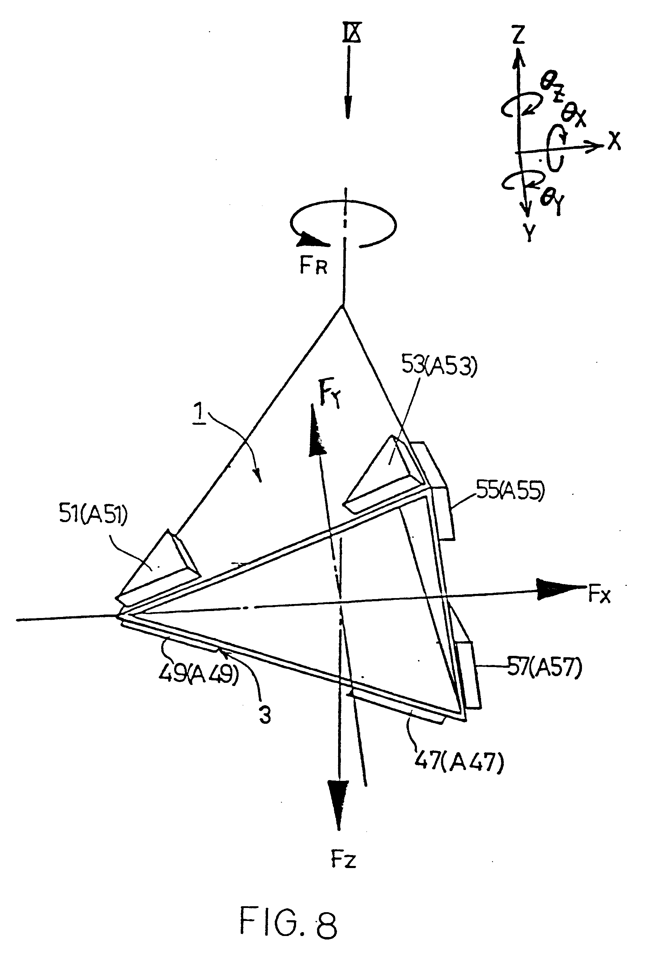

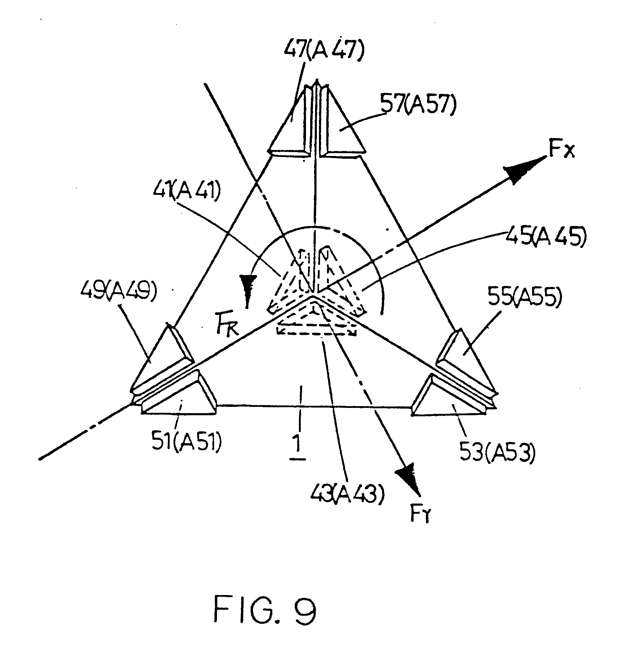

Figures 8 and 9 show embodiment 2 of this invention. As shown in Figure 8, this embodiment is composed of nine electromagnets 41 - 57 and nine position sensors A41 - A57 installed on driving body 3 which suspend and drive without contact a driven body 1 formed as a heptahedron and which is the subject to be positioned. The three inside faces of a hollow rectangular tetrahedron, of which one face is open, are also each, respectively, counted as a face. Electromagnets 41 - 57 and position sensors A41 - A57 are constructed in the same way as in embodiment one. Three electromagnets 41, 43 and 45 are each arranged facing the vertex of the three inner faces of driven body 1 with specified gaps between them and it. Two of the six electromagnets 47, 49, 51, 53, 55 and 57 are arranged facing the bottom edges of the three outer faces of driven body 1 with specified gaps between them and it. These electromagnets are connected by connecting members which are not shown in the figure.

Next, the operation of embodiment two is explained.

In Figure 8 and 9, when the currents flowing in electromagnets 41, 43, 55 and 57 are increased by position adjustment system 31 or 31A and the currents flowing in the other electromagnets 45, 47, 49, 51 and 53 are suitably increased or decreased, the magnetic force between electromagnets 41, 43, 55 and 57 and driven body 1 is intensified. Movement in directions other than the X axis, which occurs due to this magnetic force, is adjusted by the magnetic forces between the other electromagnets 45, 47, 49, 51 and 53 and driven body 1, and so the entire driven body 1 moves in the direction of the arrow Fₓ in the figure.

In the same way, when the currents flowing in electromagnets 41, 45, 51 and 53 are increased and the currents flowing in the other electromagnets 43, 47, 49, 55 and 57 are suitably increased or decreased, the magnetic force between electromagnets 41, 45, 51 and 53 and driven body 1 is intensified. Movement in directions other than the Y axis, which occurs due to this magnetic force, is adjusted by the magnetic forces between the other electromagnets 43, 47, 49, 55 and 57 and driven body 1, and so the entire driven body 1 moves in the direction of the arrow sign F_{Y} An the Figure.

Also, when the currents flowing in electromagnets 47, 51 and 55 are increased and the currents flowing in the other electromagnets 41, 43, 45, 49, 53, and 57 are suitably increased or decreased, the magnetic force between electromagnets 47, 51 and 55 and driven body 1 is intensified. Movement in directions other than the ϑ_{z} axis which occurs due to this magnetic force is adjusted by the magnetic forces between the other electromagnets 41, 43, 45, 49, 53, and 57 and driven body 1, and so the entire driven body 1 rotates in the direction of the arrow sign F_{R} in the Figure.

Furthermore, when the currents flowing in electromagnets 41, 43, and 45 are increased and the currents flowing in the other electromagnets 47, 49, 51, 53, 55, and 57 are decreased, the magnetic force between electromagnets 41, 43, and 45, and driven body 1 is intensified and the magnetic forces between the other electromagnets 47, 49, 51, 53, 55, and 57 and driven body 1 are weakened, and so the entire driven body 1 moves in the direction of the arrow sign F_{z} in the Figure.

Thus, in this Embodiment, by using 9 electromagnets 41 - 57 and 9 position sensors A₄₁ - A₅₇, the suspension of driven body 1 in any given position can be achieved.

Also, since electromagnets 41, 43 and 45 are arranged inside driven body 1, leakage of magnetic flux to the outside of driven body 1 is small and, furthermore, since the construction utilises the space inside driven body 1, the device as a whole can be made more compact.

Moreover, construction can also be by arranging electromagnets 41, 43 and 45 outside driven body 1 and arranging the other electromagnets 47, 49, 51, 53, 55 and 57 inside driven body 1.

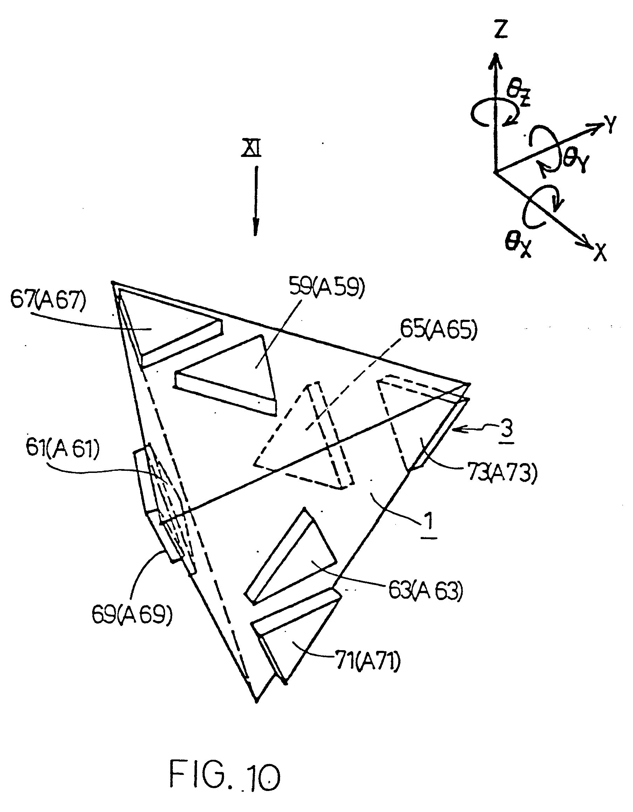

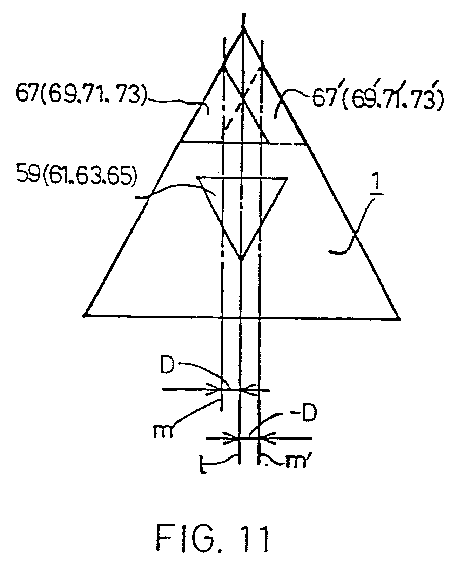

Figure 10 and 11 show Embodiment 3 of this invention. In this Embodiment, as shown in figure 10, 8 electromagnets 59 - 73 and 8 position sensors A₅₉ - A₇₃ are fitted on driving body 3 which suspends and drives without contact driven body 1 formed as a tetrahedon which is the subject of positioning. Electromagnets 59 - 73 and position sensors A₅₉ - A₇₃ are constructed in the same way as in Embodiment 1. Of the 8 electromagnets 59 - 73, 4 electromagnets 59, 61, 63 and 65 are arranged facing the positions of the centres of gravity of each of the faces of driven body 1 and drive driven body 1 in translation. 4 electromagnets 67, 69, 71 and 73 are each arranged facing 1 corner of each face of driven body 1 and drive driven body 1 in rotation. As shown in Figure 11, electromagnets 67, 69, 71 and 73 which drive driven body 1 in rotation are respectively arranged with their centres on straight lines m having deviation D or on straight lines m' having deviation -D from the perpendiculars 1 of each face of driven body 1. Therefore, approximately the same movement effect as in Embodiment 1 can be expected.

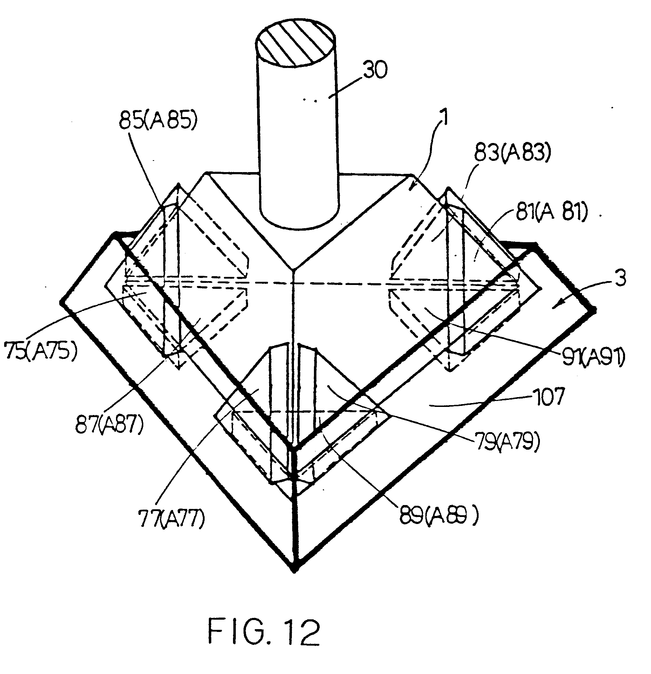

Figure 12 shows Embodiment 4 of this invention and driven body 1 has a shape like a decapitated pentahedron, with driving body 3 arranged facing the lower part of driven body 1.

In driving body 3, 9 electromagnets 75, 77, 79, 81, 83, 85, 87, 89 and 91 are provided which have magnetic attraction for, and with a specified magnetic gap from, driven body 1. Of these 9 electromagnets 75 - 91, 6 electromagnets 75, 77, 79, 81, 83 and 85 are arranged with 2 corresponding to each of 3 faces of driven body 1. 3 electromagnets 87, 89 and 91 are arranged corresponding to the remaining 1 face of driven body 1.

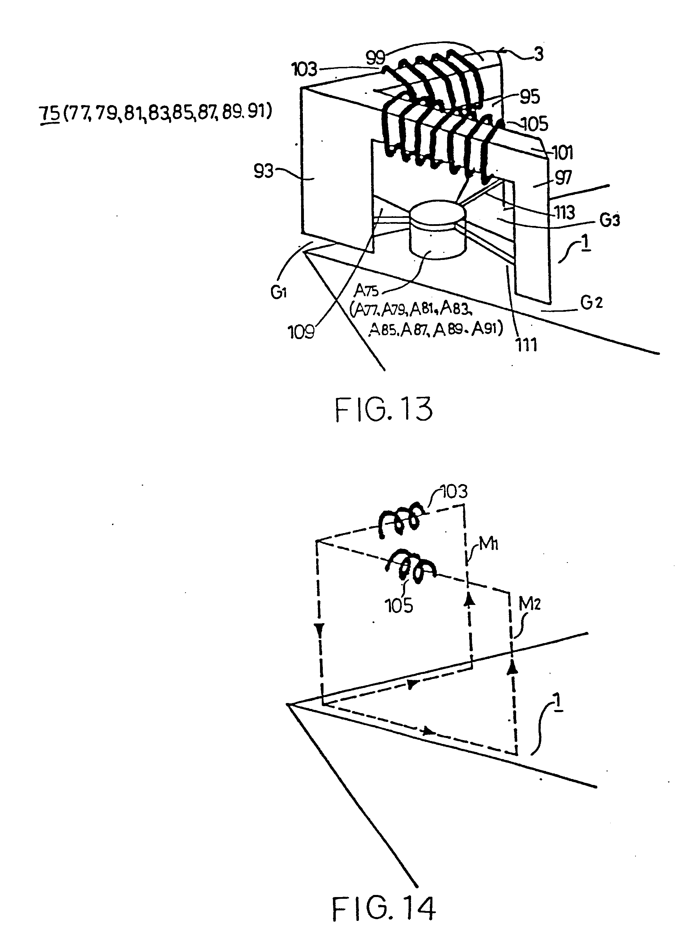

Electromagnets 75 - 91 are constructed with the same construction as shown in, for example, Figure 13. In other words, they are formed of ferromagnetic material from 3 magnetic pole-pieces 93, 95 and 97 and connecting pieces 99 and 101 which magnetically connect pole-pieces 93, 95 and 97. Coils 103 and 105 are wound round connecting pieces 99 and 101. When a suitable current flows through coils 103 and 105, magnetic closed loop M₁ forms passing through gaps G₁ and G₃ between magnetic pole-piece 93, connecting piece 99 and magnetic pole-piece 95 and driven body 1. At the same time, magnetic closed loop M₂ is formed passing through gaps G₂ and G₁ between magnetic pole-piece 93, connecting piece 101 and magnetic pole-piece 97 and driven body 1.

Driving body 3 is constructed by connecting the 9 electromagnets 75 - 91 which have this type of magnetic loop M₁ and M₂. This is done by, for example, connecting bolts (not shown in the Figure) projecting from connecting pieces 99 and 101 which pass through connecting member 107 made of non-magnetic material and are secured by nuts (not shown in the Figure). Driven body 1 is suspended without contact in relation to driving body 3 by the magnetic forces generated by magnetic loops M₁ and M₂ of electromagnets 75 -91.

Also, position sensors A₇₅ - A₉₁ are installed on electromagnets 75 - 91. These position sensors A₇₅ - A₉₁ detect the gap distances from magnetic pole-pieces 93, 95 and 97 to driven body 1, and they are arranged between magnetic pole-pieces 93, 95 and 97 in supporting members 109, 111 and 113.

The detection signals of position sensors A₇₅ - A₉₁ are input to position adjustment system 31 which adjusts the position of driven body 1 by supplying and controlling currents to each of electromagnets 75 - 91.

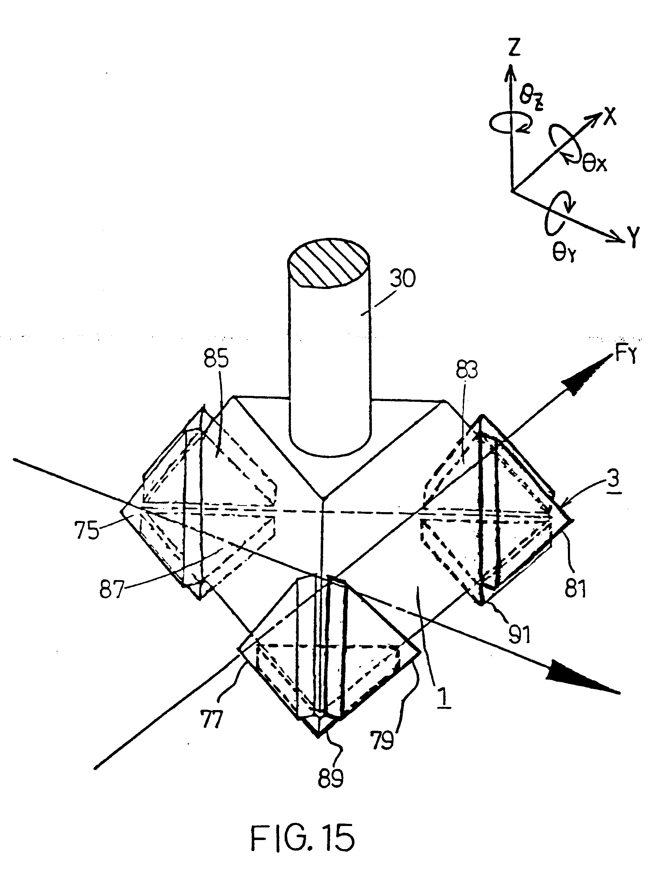

Next, the operation of Embodiment 4 is explained based on Figures 15 - 17.

In Figure 15, when the currents flowing in electromagnets 79 and 81 are increased by position adjustment system 31 and the currents flowing in the other electromagnets 75, 77, 83, 85, 87, 89 and 91 are suitably increased or decreased, the magnetic force between electromagnets 79 and 81 and driven body 1 is intensified. Movement in directions other than the X axis which occurs due to this magnetic force is adjusted by the magnetic forces between the other electromagnets 75, 77, 83, 85, 87, 89 and 91 and driven body 1, and so the entire driven body 1 moves in the direction of the arrow sign Fₓ in the Figure.

Similarly, in Figure 15, when the currents flowing in electromagnets 83 and 85 are increased by position adjustment system 31 and the currents flowing in the other electromagnets 75, 77, 79, 81, 87, 89 and 91 are suitably increased or decreased, the magnetic force between electromagnets 83 and 85 and driven body 1 is intensified. Movement in directions other than the Y axis which occurs due to this magnetic force is adjusted by the magnetic forces between the other electromagnets 75, 77, 79, 81, 87, 89 and 91 and driven body 1, and so the entire driven body 1 moves in the direction of the arrow sign F_{Y} in the Figure.

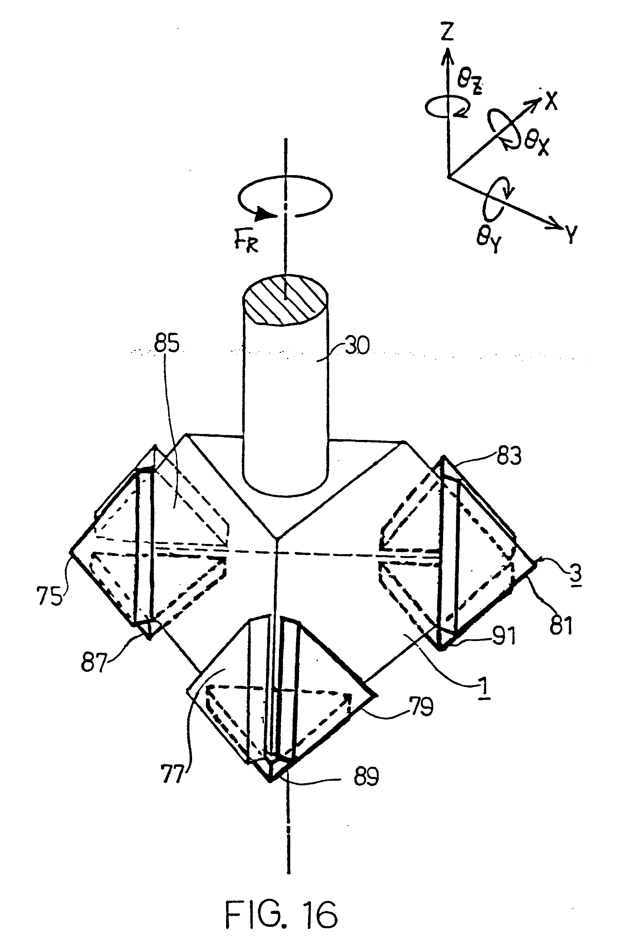

Moreover, as shown in Figure 16, when the currents flowing in electromagnets 83, 87 and 89 are increased and the currents flowing in the other electromagnets 75, 77, 79, 81, 85 and 91 are suitably increased or decreased, the magnetic force between electromagnets 83, 87 and 89 and driven body 1 is intensified. Movement in directions other than the ϑ_{z} axis which occurs due to this magnetic force is adjusted by the magnetic forces between the other electromagnets 75, 77, 79, 81, 85 and 91 and driven body 1, and so the entire driven body 1 rotates in the direction of the arrow sign F_{R} in the Figure.

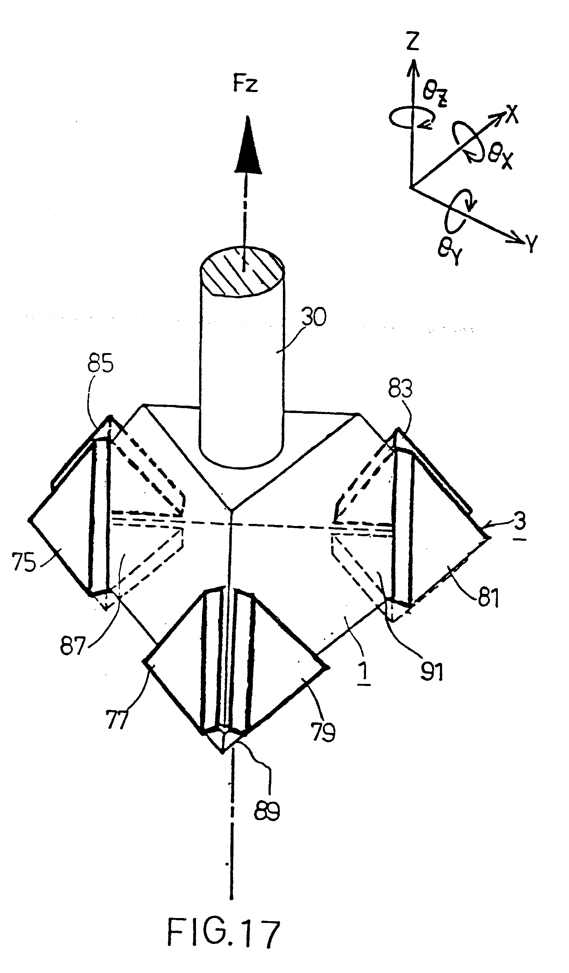

Furthermore, as shown in Figure 17, when the currents flowing in electromagnets 75, 77, 79, 81, 83 and 85 are increased and the currents flowing in the other electromagnets 87, 89 and 91 are decreased, the magnetic force between electromagnets 75, 77, 79, 81, 83 and 85 and driven body 1 is intensified. Since the magnetic force between the other electromagnets 83, 89 and 91 and driven body 1 is weakened, the entire driven body 1 moves in the direction of the arrow sign F_{z} in the Figure.

Thus, in the non-contact positioning device of this Embodiment, by using 9 electromagnets 75 - 91 and 9 position sensors A₇₅ - A₉₁, the suspension of driven body 1 in any given position can be achieved. Therefore, a similar effect to that of Embodiment 1 can be expected.

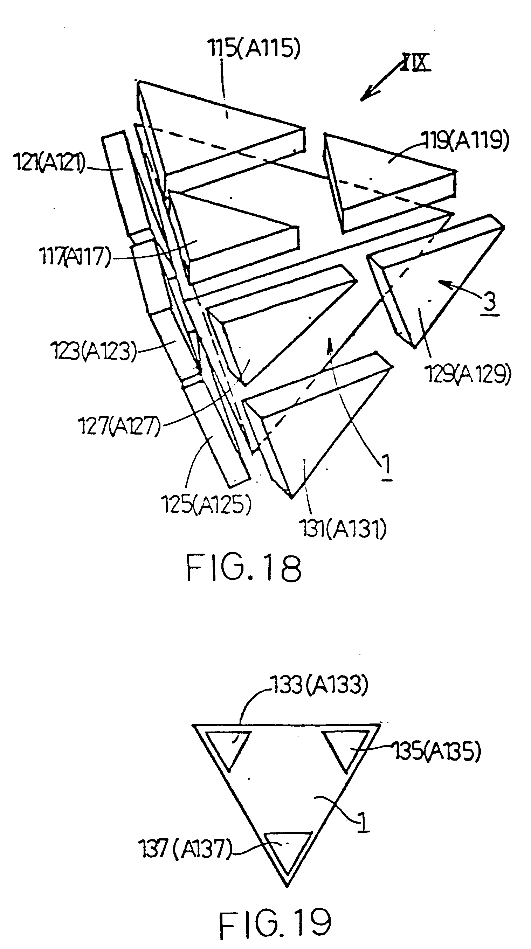

Figure 18 and 19 show Embodiment 5 of this invention. This Embodiment, as shown in Figure 18, is composed of 12 electromagnets 115 - 137 and 12 position sensors A₁₁₅ - A₁₃₇ fitted to driving body 3 which suspends and drives without contact driven body 1 which is formed as a tetrahedron and is the subject of positioning. Electromagnets 115 - 137 and position sensors A₁₁₅ - A₁₃₇ are constructed in the same way as in Embodiment 1 and 3 each are arranged to correspond to each of the 4 faces of driven body 1.

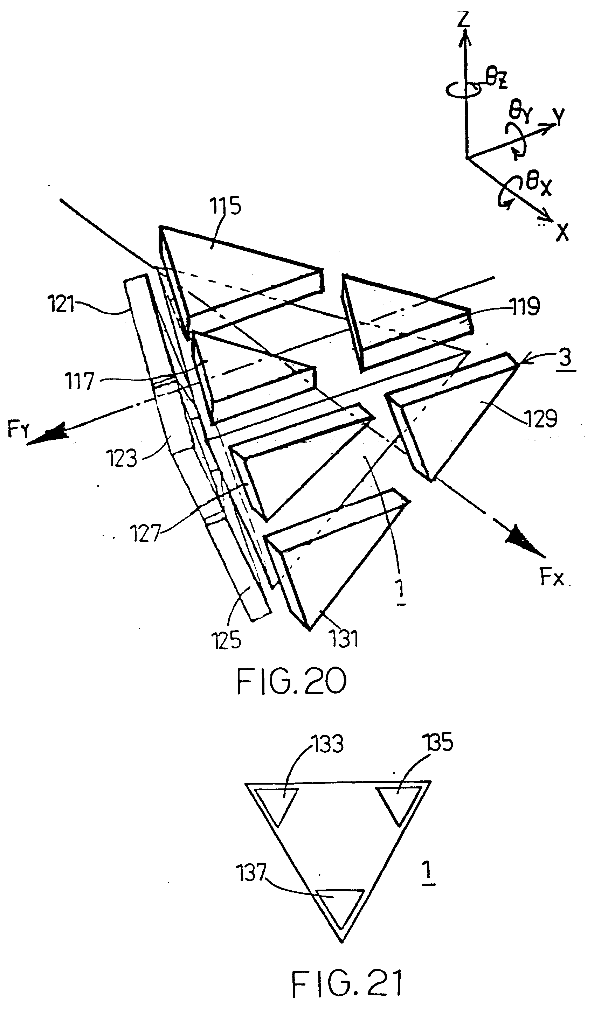

Next, the action of Embodiment 5 is explained based on Figures 20 - 24.

In Figures 20 and 21, when the currents flowing in electromagnets 127, 129 and 131 are increased by position adjustment system 31 and the currents flowing in the other electromagnets 115, 117, 119, 121, 123, 125, 133, 135 and 137 are suitably increased or decreased, the magnetic force between electromagnets 127, 129 and 131 and driven body 1 is intensified. Movement in directions other than the X axis which occurs due to this magnetic force is adjusted by the magnetic forces between the other electromagnets 115, 117, 119, 121, 123, 133, 135 and 137 and driven body 1, and so the entire driven body 1 moves in the direction of the arrow sign Fₓ in Figure 20.

Similarly, in Figure 20 and 21, when the currents flowing in electromagnets 121, 123 and 125 are increased 31 and the currents flowing in the other electromagnets 115, 117, 119, 127, 129, 131, 133, 135 and 137 are suitably increased or decreased, the magnetic force between electromagnets 121, 123 and 125 and driven body 1 is intensified. Movement in directions other than the Y axis which occurs due to this magnetic force is adjusted by the magnetic forces between the other electromagnets 115, 117, 119, 127, 129, 131, 133, 135 and 137 and driven body 1, and so the entire driven body 1 moves in the direction of the arrow sign F_{Y} in the Figure 20.

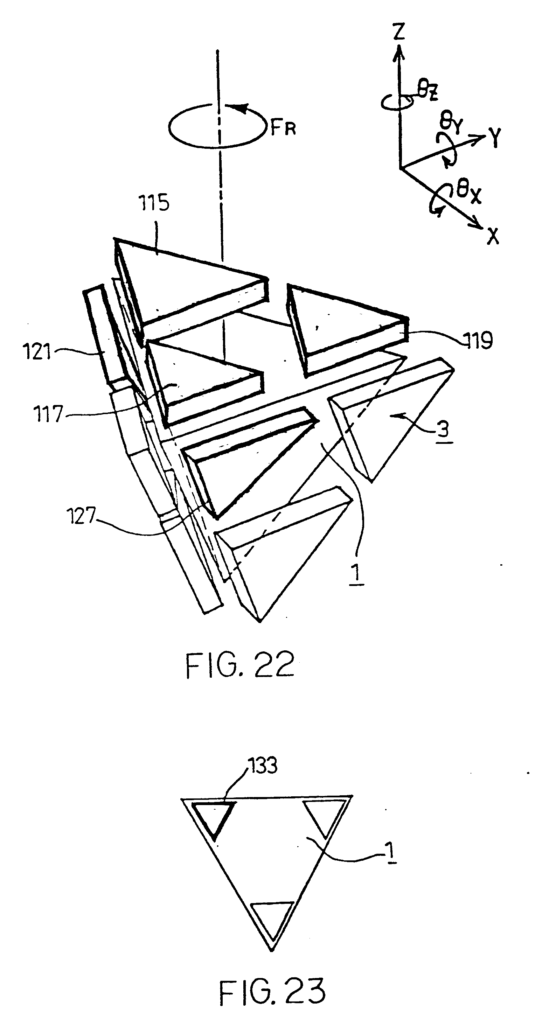

Moreover, as shown in Figure 22 and 23, when the currents flowing in electromagnets 121, 127 and 133 are increased and the currents flowing in the other electromagnets 115, 117, 119, 123, 125, 129, 131, 135 and 137 are suitably increased or decreased, the magnetic force between electromagnets 121, 127 and 133 and driven body 1 is intensified. Movement in directions other than the ϑ_{z} axis which occurs due to this magnetic force is adjusted by the magnetic forces between the other electromagnets 115, 117, 119, 123, 125, 129, 131, 135 and 137 and driven body 1, and so the entire driven body 1 rotates in the direction of the arrow sign F_{R} in the Figure 22.

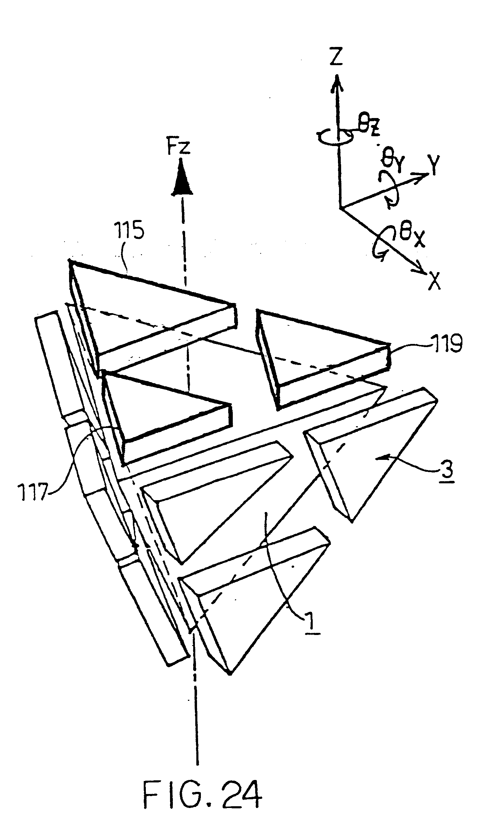

Furthermore, as shown in Figure 24, when the currents flowing in electromagnets 115, 117 and 119 are increased and the currents flowing in the other electromagnets 121 - 137 are decreased, the magnetic force between electromagnets 115, 117 and 119 and driven body 1 is intensified. Since the magnetic force between the other electromagnets 121 - 137 and driven body 1 is weakened, the entire driven body 1 moves in the direction of the arrow sign F_{z} in the Figure.

Therefore, in this Embodiment, driven body 1 can be suspended in any given position by 12 electromagnets 115 - 137 and 12 position sensors A₁₁₅ - A₁₃₇. Moreover, since this Embodiment can be operated as in the Embodiments in Figures 1 - 4, even if some of the 12 electromagnets are out of action, this construction has a high degree of redundancy.

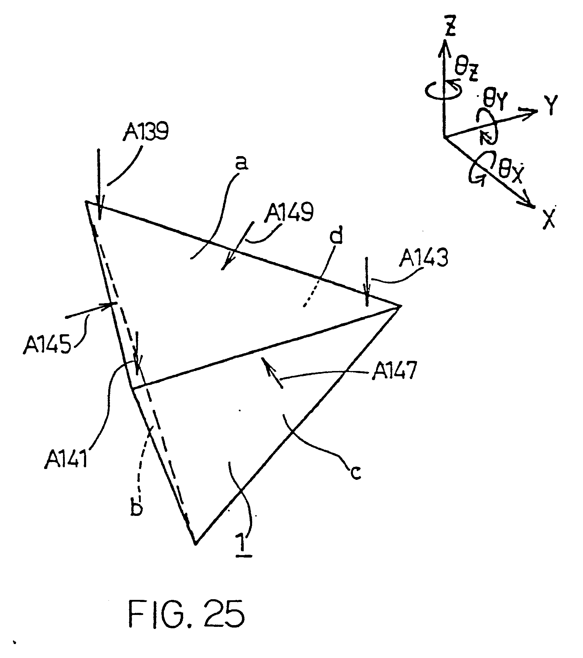

Figure 25 relates to Embodiment 6 of this invention and it is a modification of Embodiment 5. In the construction of this Embodiment, the number of position sensors has been reduced to 6 as against that of Embodiment 5. That is to say, 3 position sensors A₁₃₉, A₁₄₁ and A₁₄₃ are arranged facing the 'a' face of driven body 1 and detect position on the Z axis, around the X axis and around the Y axis. The other 3 position sensors A₁₄₅, A₁₄₇ and A₁₄₉ are arranged facing the 'b' face, the 'c' face and the 'd' face of driven body 1 and are also arranged in the centre of the edge adjacent to the 'a' face so that they detect position on the X axis, on the Y axis and around the Z axis.

This kind of construction is effective for other embodiments, and the number of position sensors can be minimised.

Moreover, in each of the above Embodiments, if the electromagnets limit the degrees-of-freedom of positioning of the driven body, they can be arranged to face a selected number of faces without arranging them to face all the faces of a simple polyhedron.

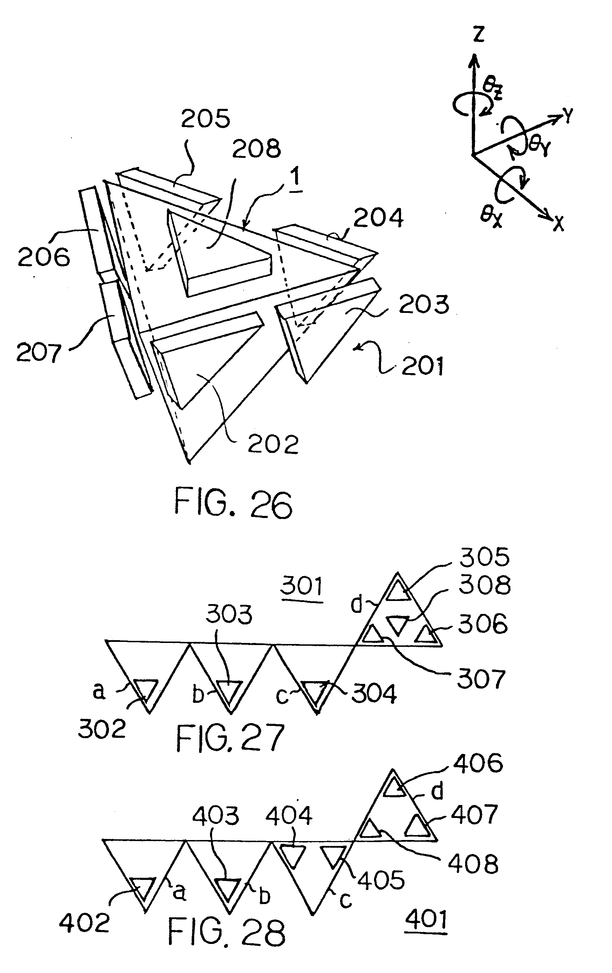

Figure 26 relates to Embodiment 7 of this invention. In the construction of this Embodiment 7, electromagnets 202, 203, 204, 205, 206, 207 and 208 are provided in driving body 201 having magnetic attraction for driven body 1, with a spacified magnetic gap by the process of absorption force. Especially, in this Embodiment, the electromagnet 208 is only one provided on a upper surface of the driven body 1. Since this Embodiment can be operated as in other Embodiments, can be driven and positioned the driven body 1 for every directions to X, Y, Z, ϑx, ϑy and ϑz as shown in Figures, and the number of electromagnets can be minimised. And then, by this construction, the number of position sensors which is shown as Figure 3 and 7 can be minimised too. The attached position of electromagnets can be replaced by other construction such as, for example, as shown in Figure 27 and 28. These Figures are shown an extended view a disposition of electromagnets (driving units) 302, 303, 304, 305, 306, 307 and 308 in a driving means 301 and electromagnets (driving units) 402, 403, 404, 405, 406, 407 and 408 in a driving means 401 at each surface a, b, c and d of the polyhedron related to the driven body 1.

## Claims

1. A positioning device comprising a driving body (3) having at least four plane surfaces supporting at least seven electromagnetic drive units between them, a driven body (1) having at least four plane surfaces of magnetic material which correspond with the four surfaces of the driving body, and control means (33, 35) for independently energising the coils of the electromagnetic drive units to position the driven body (1) relative to the driving body (3) without physical contact between them, characterised in that the surfaces of each body define a polyhedron and the driven body (1) is positioned by regulating the coils of the drive units to control the six degrees of freedom of the driven body.

2. A positioning device according to claim 1 wherein the driving body (3) has four plane surfaces and the driven body (1) has four plane surfaces of magnetic material which correspond with the four surfaces of the driving body, characterised in that the four surfaces of each body define a right tetrahedron.

3. A positioning device according to claim 2, characterised in the provision of eight drive units (5, 7, 9, 11, 13, 15, 17, 19) on the driving body with two of said drive units on each of said surfaces.

4. A positioning device according to claim 2, characterised in the provision of twelve drive units (115, 117, 119, 121, 123, 125, 127, 129, 131, 133, 135, 137) on the driving body with three of said drive units on each of said surfaces.

5. A positioning device as claimed in claim 2, characterised in the provision of seven drive units (202, 203, 204, 205, 206, 207, 208) with each of three surfaces of said body having two drive units thereon and the other surface having one drive unit thereon.

6. A positioning device as claimed in claim 2, characterised in the provision of seven drive units (302, 303, 304, 305, 306, 307, 308) with each of three surfaces of the body having one drive unit thereon and the other surface of the body having four drive units thereon.

7. A positioning device as claimed in claim 2, characterised in the provision of seven drive units (402, 403, 404, 405, 406, 407, 408) with two of said surfaces each having one drive unit thereon, one of said surfaces having two drive units thereon and the other surface having three drive units thereon.

8. A positioning device as claimed in claim 2, characterised in the provision of nine drive units (75, 77, 79, 81, 83, 85, 87, 89, 91), the three surfaces corresponding to the three vertex portions of said tetrahedron each having three units thereon.

9. A positioning device as claimed in any one of claims 2 to 8, characterised in that said control means comprises a position detecting means (A5) for detecting the distance between said driven body (1) and said driving unit (5); and a position adjustment system (31) for adjusting and for controlling the signal of said drive unit (5).

10. A positioning device according to claim 9, characterised in that said position adjustment system (31) comprises a first vector computing element (33) connected to position sensors; plural controllers (B1, B3, B5, B7, B9) connected to said first vector computing element (33); a second vector computing element (35) for distributing signals from said plural controllers (B1, B3, B5, B7, B9); and a signal amplifier (C1, C3, C5, C7, C9, C11, C13, C15) for amplifying said output signal obtained from said second vector computing element (35).

11. A positioning device according to claim 9, characterised in that said position adjustment system (31A) comprises a vector computing element (39) connected to position sensors (A5, A7, A9, A11, A13, A15, A17, A19); plural calculators connected to said vector computing element (39); controllers (B13, B15, B17, B19, B21, B23, B25, B27) connected to said plural calculators; and signal amplifiers (C1, C3, C5, C7, C9, C11, C13, C15) for amplifying said output signal obtained from said vector computing element (39).

12. A positioning device according to claim 9, characterised in that each drive unit (75) is integral with a position sensor (A75).

13. A positioning device according to any one of claims 2-12, characterised in that said drive units are of identical form.

14. A positioning device according to claim 9, characterised in that each of said drive units (75) is in the form of a triangle.

15. A positioning device according to claim 2, characterised in that said driving body (3) includes multiple drive units, at least one of said drive units disposed on the vertex portion of said triangle plane.

16. A positioning device according to claim 2, characterised in that said driving body (3) includes multiple drive units, at least one of said drive units (67) is disposed on the vertex portion of said triangle plane and arranged with shift (D), (-D) from the perpendicular bisector of the triangle plane.

## Patentansprüche

1. Positioniereinrichtung, die einen treibenden Körper (3), der mindestens vier ebene Flächen hat, die mindestens sieben elektromagnetische Antriebseinheiten dazwischen tragen, einen getriebenen Körper (1), der mindestens vier ebene Flächen aus magnetischem Material hat, die den vier Flächen des treibenden Körpers entsprechen und Steuermittel (33, 35) umfaßt, um die Spulen der elektromagnetischen Antriebseinheiten unabhängig zu erregen, um den getriebenen Körper (1) bezogen auf den treibenden Körper (3) ohne physischen Kontakt dazwischen zu positionieren, **dadurch gekennzeichnet,** daß die Flächen jedes Körpers einen Vielflächner definieren und der getriebene Körper (1) durch Regulieren der Spulen der Antriebseinheiten positioniert wird, um die sechs Freiheitsgrade des getriebenen Körpers zu steuern.

2. Positioniereinrichtung nach Anspruch 1, bei welcher der treibende Körper (3) vier ebene Flächen hat und der getriebene Körper (1) vier ebene Flächen aus magnetischem Material hat, welche den vier Flächen des treibenden Körpers entsprechen, **dadurch gekennzeichnet,** daß die vier Flächen jedes Körpers ein rechtwinkliges Tetraeder definieren.

3. Positioniereinrichtung nach Anspruch 2, **gekennzeichnet durch** die Bereitstellung von acht Antriebseinheiten (5, 7, 9, 11, 13, 15, 17, 19) an dem treibenden Körper mit zwei dieser Antriebseinheiten auf jeder Fläche.

4. Positioniereinrichtung nach Anspruch 2, **gekennzeichnet durch** die Bereitstellung von zwölf Antriebseinheiten (115, 117, 119, 121, 123, 125, 127, 129, 131, 133, 135, 137) an dem treibenden Körper mit drei dieser Antriebseinheiten auf jeder Fläche.

5. Positioniereinrichtung nach Anspruch 2, **gekennzeichnet durch** die Bereitstellung von sieben Antriebseinheiten (202, 203, 204, 205, 206, 207, 208), wobei sich an jeweils drei Flächen des Körpers zwei Antriebseinheiten befinden und sich an der anderen Fläche eine Antriebseinheit befindet.

6. Positioniereinrichtung nach Anspruch 2, **gekennzeichnet durch** die Bereitstellung von sieben Antriebseinheiten (302, 303, 304, 305, 306, 307, 308), wobei sich an jeweils drei Flächen des Körpers eine Antriebseinheit befindet und sich an der anderen Fläche des Körpers vier Antriebseinheiten befinden.

7. Positioniereinrichtung nach Anspruch 2, **gekennzeichnet durch** die Bereitstellung von sieben Antriebseinheiten (402, 403, 404, 405, 406, 407, 408), wobei sich an jeweils zwei Flächen eine Antriebseinheit befindet, sich an einer Fläche zwei Antriebseinheiten befinden und sich an der anderen Fläche drei Antriebseinheiten befinden.

8. Positioniereinrichtung nach Anspruch 2, **gekennzeichnet durch** die Bereitstellung von neun Antriebseinheiten (75, 77, 79, 81, 83, 85, 87, 89, 91), wobei an den drei Flächen, die den drei Eckpunkten des Tetraeders entsprechen, sich jeweils drei Einheiten befinden.

9. Positioniereinrichtung nach einem der Ansprüche 2 bis 8, **dadurch gekennzeichnet,** daß das Steuermittel ein eine Position feststellendes Mittel (A5) für das Feststellen der Entfernung zwischen dem getriebenen Körper (1) und der Antriebseinheit (5) und ein Positions-Justiersystem (31) für das Justieren und für die Steuerung des Signals der Antriebseinheit (5) umfaßt.

10. Positioniereinrichtung nach Anspruch 9, **dadurch gekennzeichnet,** daß das Positions-Justiersystem (31) ein erstes Vektorberechnungselement (33), das mit Positionssensoren verbunden ist; mehrere Steuereinrichtungen (B1, B3, B5, B7, B9), die mit dem ersten Vektorberechnungselement (33) verbunden sind; ein zweites Vektorberechnungselement (35) für die Verteilung von Signalen von den mehreren Steuereinrichtungen (B1, B3, B5, B7, B8); und einen Signalverstärker (C1, C3, C5, C7, C9, C11, C13, C15) für die Verstärkung der Ausgabesignale umfaßt, die man von dem zweiten Vektorberechnungselement (35) erhält.

11. Positioniereinrichtung nach Anspruch 9, **dadurch gekennzeichnet,** daß das Positions-Justiersystem (31A) ein Vektorberechnungselement (39), das mit Positionssensoren (A5, A7, A9, A11, A13, A15, A17, A19) verbunden ist; mehrere Rechner, die mit dem Vektorberechnungselement (39) verbunden sind; Steuereinrichtungen (B13, B15, B17, B19, B21, B23, B25, B27), die mit den mehreren Rechnern verbunden sind; und Signalverstärker (C1, C3, C5, C7, C9, C11, C13, C15) für die Verstärkung der Ausgangssignale umfaßt, die man von dem Vektorberechnungselement (39) erhält.

12. Positioniereinrichtung nach Anspruch 9, **dadurch gekennzeichnet,** daß jede Antriebseinheit (75) untrennbar mit einem Positionssensor (A75) verbunden ist.

13. Positioniereinrichtung nach einem der Ansprüche 2 - 12, dadurch gekennzeichnet, daß die Antriebseinheiten von identischer Form sind.

14. Positioniereinrichtung nach Anspruch 9, **dadurch gekennzeichnet,** daß jede Antriebseinheit (75) die Form eines Dreiecks hat.

15. Positioniereinrichtung nach Anspruch 2, **dadurch gekennzeichnet,** daß der treibende Körper (3) eine Vielzahl von Antriebseinheiten beinhaltet, wobei mindestens eine dieser Antriebseinheiten am Eckpunktteil der Dreiecksebene angeordnet ist.

16. Positioniereinrichtung nach Anspruch 2, **dadurch gekennzeichnet,** daß der treibende Körper (3) eine Vielzahl von Antriebseinheiten einschließt, wobei mindestens eine dieser Antriebseinheiten (67) am Eckpunktteil der Dreiecksebene angeordnet und um (D), (-D) aus der senkrechten Halbierungslinie der Dreiecksebene verschoben ist.

## Revendications

1. Dispositif de positionnement qui comprend un corps menant (3) ayant, au moins, quatre faces planes supportant, au moins, sept unités d'actionnement électromagnétiques interposées, un corps mené (1) ayant, au moins, quatre surfaces planes de matière magnétique qui correspondent aux quatre surfaces du corps menant, et des moyens de commande (33, 35) qui excitent de manière indépendante les bobinages des unités d'actionnement électromagnétiques afin de positionner le corps mené (1) par rapport aux corps menant (3) sans contact physique entre eux, caractérisé en ce que les surfaces de chaque corps définissent un polyèdre et en ce qu'on place le corps mené (1) en réglant les bobinages des unités d'actionnement pour régler les six degrés de liberté du corps mené.

2. Dispositif de positionnement selon la revendication 1, caractérisé en ce que le corps menant (3) possède quatre surfaces planes, tandis que le corps (1) mené possède quatre surfaces planes de matière magnétique correspondant aux quatre surfaces du corps menant.

3. Dispositif de positionnement selon la revendication 2, caractérisé en ce qu'il comporte huit unités d'actionnement (5, 7, 9, 11, 13, 15, 17, 19) sur le corps menant, et en ce que deux desdites unités d'actionnement sont montées sur chacune desdites surfaces.

4. Dispositif de positionnement selon la revendication 2, caractérisé en ce qu'il comporte douze unités d'actionnement (115, 117, 119, 121, 123, 125, 127, 129, 131, 133, 13 5, 137) sur le corps menant, trois de ces dernières étant montées sur chacune desdites surfaces.

5. Dispositif de positionnement selon la revendication 2, caractérisé en ce qu'il comporte sept unités d'actionnement (202, 203, 204, 205, 206, 207, 208) dont chacune possède trois surfaces sur lesquelles sont montées deux unités d'actionnement, tandis qu'une seule unité d'actionnement est placée sur l'autre surface.

6. Dispositif de positionnement selon la revendication 2, caractérisé en ce qu'il comporte sept unités d'actionnement (302, 303, 304, 305, 306, 307, 308) dont chacune des trois surfaces du corps possède une unité d'actionnement, tandis que l'autre surface du corps comporte quatre unités d'actionnement.

7. Dispositif de positionnement selon la revendication 2, caractérisé en ce qu'il possède sept unités d'actionnement (402, 403, 404, 405, 406, 407, 408) et en ce que deux desdites surfaces comportent une unité d'actionnement, tandis que l'une d'entre elles possède deux unités d'actionnement et que l'autre surface comporte trois unités d'actionnement.

8. Dispositif de positionnement selon la revendication 2, caractérisé en ce qu'il est pourvu de neuf unités d'actionnement (75, 77, 79, 81, 83, 85, 87, 89, 91), les trois surfaces correspondant aux trois sommets dudit tétraèdre comportant chacune trois des unités.

9. Dispositif de positionnement selon l'une quelconque des revendications 2 à 9, caractérisé en ce que lesdits moyens de commande comprennent un détecteur de position (A5) pour déterminer la distance séparant ledit corps mené (1) et ladite unité d'actionnement (5) et un système de réglage de position (31) pour ajuster et régler le signal de ladite unité d'actionnement (5).

10. Dispositif de positionnement selon la revendication 9, caractérisé en ce que ledit système de réglage de position (31) comprend un premier élément de calcul vectoriel (33) connecté à des senseurs ou capteurs de position, plusieurs commandes (B1, B3, B5, B7, B9) connectées au premier élément de calcul vectoriel (33) ; un second élément de calcul vectoriel (35) pour distribuer des signaux provenant desdites commandes (C1, C3, C5, C7, C9, C11, C13, C15) afin d'amplifier le signal de sortie obtenu du second élément de calcul vectoriel (35).

11. Dispositif de positionnement selon la revendication 9, caractérisé en ce que ledit dispositif de réglage de position (31A) comprend un élément de calcul vectoriel (39) connecté à un certain nombre de senseurs ou de capteurs de position (A5, A7, A9, A11, A13, A15, A17, A19) ; plusieurs calculateurs connectés audit élément de calcul vectoriel (39) ; des commandes (B13, B15, B17, B19, B21, B23, B25, B27) connectées auxdits calculateurs ; et des amplificateurs de signaux (C1, C3, C5, C7, C9, C11, C13, C15) pour amplifier ledit signal de sortie délivré par ledit élément de calcul vectoriel (39).

12. Dispositif de positionnement selon la revendication 9, caractérisé en ce que chaque unité d'actionnement (75) est solidaire d'un senseur de position (A75).

13. Dispositif de positionnement selon l'une quelconque des revendications 2 à 12, caractérisé en ce que lesdites unités d'actionnement sont toutes de forme identique.

14. Dispositif de positionnement selon la revendication 9, caractérisé en ce que chacune desdites unités d'actionnement (75) ont la forme d'un triangle.

15. Dispositif de positionnement selon la revendication 2, caractérisé en ce que ledit corps menant (3) comporte un certain nombre d'unités d'actionnement dont l'une, au moins, est placée au sommet dudit triangle.

16. Dispositif de positionnement selon la revendication 2, caractérisé en ce que ledit corps menant (3) comprend un certain nombre d'unités d'actionnement dont l'une, au moins, (67) est située au sommet dudit triangle et est présenté un certain décalage (D), (-D) par rapport à la bissectrice perpendiculaire au plan dudit triangle.
